# FASCICULE DE BREVET EUROPEEN

(11) **EP 0 895 742 B1**
(45) Date de publication et mention de la délivrance du brevet: **16.04.2003**
(21) Numéro de dépôt: 98420139.2
(22) Date de dépôt: 31.07.1998
(51) Int. Cl.: A47J 27/21, H01R 13/703

(54) **Dispositif de connexion pour appareil portatif**
Verbindungsanordnung für tragbares Gerät
Connection device for portable apparatus

(30) Priorité: 04.08.1997 FR 9710171
(43) Date de publication de la demande: 10.02.1999
(73) Titulaire: SEB S.A., 69130 Ecully (FR)
(72) Inventeur: Balandier, Jean-Marie, 88400 Gérardmer (FR); Wilhelm, Patrick, 88200 Dommartin les Remiremont (FR)
(74) Mandataire: Kiehl, Hubert

(56) Documents cités:
- WO-A-95/08204
- DE-A- 1 490 038

## Description

La présente invention concerne le domaine des appareils électriques en général et elle s'applique plus particulièrement (mais non exclusivement) aux appareils électroménagers et notamment aux bouilloires électriques.

Elle concerne plus précisément un dispositif de connexion pour appareil électrique tel une bouilloire, qui permet de réaliser une connexion électrique entre l'appareil et son socle de façon simplifiée. Un tel dispositif est décrit dans le document WO-9508204. Le présent dispositif permet notamment de réaliser en toute facilité la pose d'un appareil électrique sur son socle d'alimentation sans se soucier de la position angulaire de l'un par rapport à l'autre .

Afin d'atteindre ces buts, il est prévu un dispositif de connexion pour appareil électrique comprenant un élément connecteur femelle constitué d'une paroi formant une face de contact, au moins un orifice d'enfichage principal, et au moins une première tige de contact électrique, un élément connecteur mâle constitué d'une paroi formant une face de contact sur laquelle est disposée au moins une première bande de contact électrique, ledit élément connecteur mâle étant adapté pour être disposé de manière amovible en position de connexion contre ledit élément connecteur femelle, caractérisé en ce que la ou les tiges de contact électrique sont prévues mobiles sur un moyen d'extraction des tiges de contact et disposées en regard desdits orifices de façon à ce que lorsque les faces de contact des éléments mâle et femelle sont disposés à proximité immédiate l'une de l'autre, les extrémités libres des tiges de contact électrique traversent les orifices et sont susceptibles d'entrer en contact électrique avec les bandes de contact électrique de l'élément connecteur mâle.

Un tel dispositif permet de réaliser une connexion entre les deux éléments sans devoir se préoccuper de leur position angulaire respective.

Un autre avantage lié à l'utilisation d'un dispositif de connexion selon l'invention concerne plus particulièrement la sécurité liée à l'utilisation d'appareils électrique en général. Le fait que les tiges de liaison électrique soient en position escamotée lors de la déconnexion, assure une sûreté maximale.

D'autres caractéristiques et avantages de l'invention apparaîtront plus clairement à la lumière de la description et des dessins qui suivent, illustrant, à titre d'exemples non limitatifs, des modes de mise en oeuvre de l'invention. Ainsi, référence est faite aux figures 1 à 9 où :
La figure 1 représente une coupe en élévation d'une bouilloire comprenant un dispositif de connexion selon l'invention avant emboîtement des deux parties du connecteur;
la figure 2 représente une vue partielle de la bouilloire de la figure 1, une fois les deux parties du connecteur emboîtées;
la figure 3 représente une vue en perspective des deux portions du connecteur;
les figures 4a à 4d représentent schématiquement le principe de fonctionnement d'une variante d'un dispositif de connexion selon l'invention;
la figure 5 représente schématiquement une autre variante d'un dispositif de connexion selon l'invention;
la figure 6 représente schématiquement une bouilloire utilisant un tel type de connecteur;
la figure 7 représente schématiquement une autre variante d'un dispositif de connexion selon l'invention;
les figures 8a, 8b, 8c, et 8d représentent schématiquement une autre variante d'un dispositif de connexion selon l'invention;
les figures 9a et 9b représentent schématiquement une autre variante d'un dispositif de connexion selon l'invention.

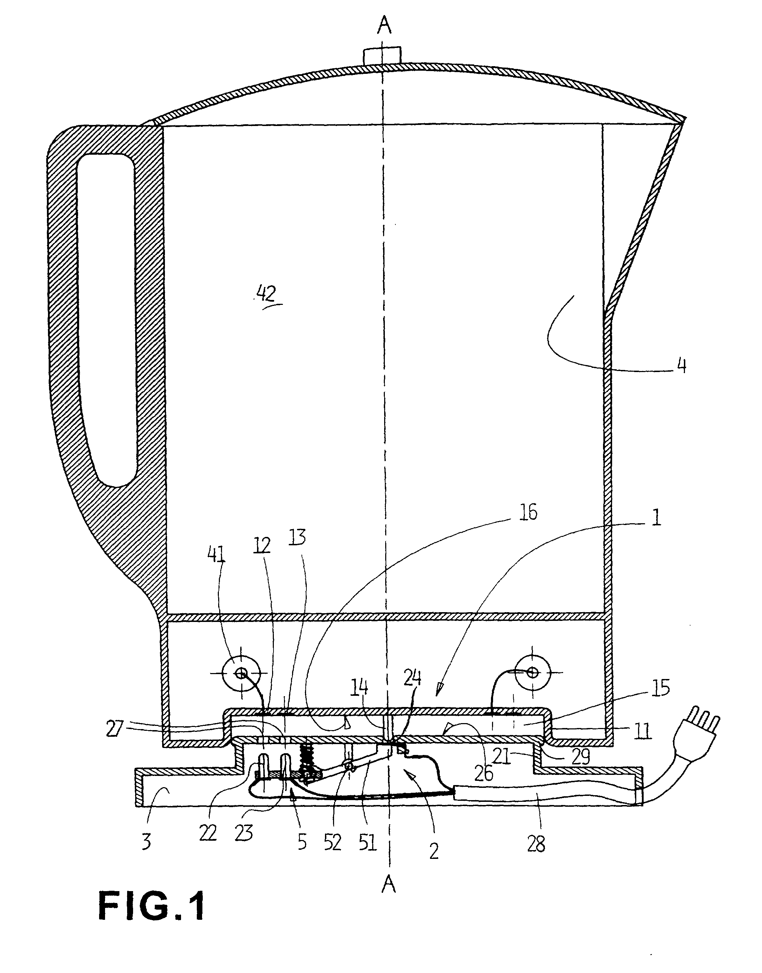

La figure 1 illustre une vue de coupe en élévation d'un appareil électrique 4 comprenant un dispositif de connexion selon l'invention. L'appareil illustré constitue une bouilloire mais tout autre type d'appareil que l'on souhaite utiliser de manière avantageuse désolidarisé de son câble d'alimentation électrique peut également être prévu, comme par exemple un fer à repasser, un récipient de cuisson, un robot culinaire, etc.

La bouilloire 4 comprend un réservoir 42 normalement rempli d'eau que l'on souhaite réchauffer par exemple pour l'amener à son point d'ébullition. Un élément chauffant 41 disposé en communication thermique avec le réservoir sert à générer l'énergie thermique nécessaire. Cet élément chauffant doit être alimenté en énergie électrique, par exemple en courant alternatif de type 110 ou 220 volts. Par ailleurs, pour des raisons d'ergonomie, on souhaite pouvoir utiliser la bouilloire sans subir l'encombrement ou la gêne occasionnée par le fil d'alimentation électrique prévu pour relier l'appareil électrique au réseau. En effet, ce fil représente une gêne constante lorsque l'on souhaite utiliser l'appareil. Dans l'exemple de la bouilloire, le fil nuit à sa manipulation lors par exemple de son remplissage sous le robinet ou lors du service de l'eau chaude, notamment lorsque l'on souhaite se déplacer avec la bouilloire.

Pour éviter cet inconvénient, l'appareil électrique est notamment constitué de deux parties. Un socle 3, servant à la fois de base d'appui et de point d'alimentation électrique sur lequel l'appareil électrique amovible, par exemple la bouilloire, est disposée. La bouilloire repose donc sur une base stable et se trouve reliée au réseau, permettant de ce fait d'effectuer une phase de chauffage. La partie amovible est prévue pour être désolidarisée de sa base par simple prise par exemple par une anse.

La pose sur le socle est également notoirement simplifiée grâce à un ensemble de connexion permettant de disposer la bouilloire sur le socle sans devoir respecter une orientation angulaire donnée.

Pour réaliser ce type de connexion, le socle 3 comprend un élément connecteur femelle 2, conformé de manière avantageuse par une paroi 21 délimitant une portion proéminente 29 ou saillie sur le dessus du socle. Cette saillie 29 est avantageusement prévue selon un profil cylindrique fermé, le dessus du cylindre formant une face de contact 26 de l'élément femelle. La face de contact 26 est avantageusement plane, de façon à permettre le positionnement de la bouilloire selon un angle quelconque. Cette face délimite au moins un orifice d'enfichage principal; dans l'exemple illustré à la figure 1, la face 26 délimite deux orifices d'enfichage principaux 27 disposés chacun à une distance radiale donnée, mais différente, par rapport à un axe central virtuel A-A du socle et de la bouilloire. Sous la portion en saillie 29, est prévue au moins une tige de contact électrique. Dans l'exemple de réalisation illustré à la figure 1, une première 22 et une seconde 23 tige de contact électrique sont prévues. Ces tiges sont chacune reliées à un des fils du cordon d'alimentation 28 reliant de manière amovible le socle à une prise murale secteur.

Un moyen d'extraction 5 des tiges de contact est également prévu dans le socle. Ce moyen d'extraction permet de déplacer les tiges de contact 22 et 23 à travers les orifices d'enfichage 27 de manière à ce que leur extrémité libre s'étende vers l'extérieur du socle au-delà de la face de contact 26.

Un orifice de commande 24 est également délimité dans la face 26. Cet orifice de commande sert de passage d'introduction à un élément de commande 14 prévu sur l'élément connecteur mâle 1. Cet élément de commande est utile pour commander le déplacement des tiges de contact 22 et 23 en agissant sur le moyen d'extraction des tiges de contact. Cet élément peut être réalisé en matériau isolant ou encore en métal; dans ce dernier cas, il peut également jouer le rôle de conducteur de terre.

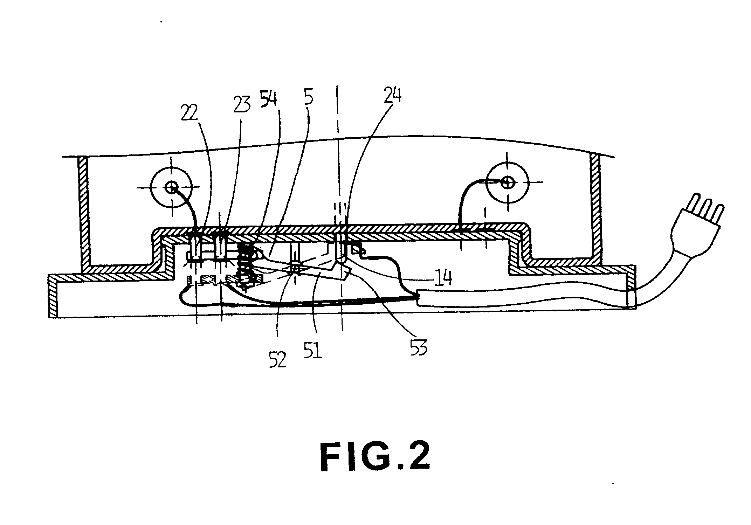

Selon une forme d'exécution avantageuse de l'invention illustrée aux figures 1 et 2, le moyen d'extraction des tiges de contact de l'élément connecteur femelle est un moyen de pivotement. Ainsi, dans l'exemple illustré, on prévoit un levier coudé 51 dont l'extrémité libre est orientée vers l'orifice de commande 24. Le levier s'étend sensiblement radialement et son autre extrémité est reliée aux tiges de contact électriques 22 et 23. Un pivot 52 est prévu le long de la portion radiale entre la portion coudée et les tiges de contacts. La position du pivot est déterminée en fonction de la course souhaitée pour les tiges 22 et 23 ou d'une éventuelle amplification (ou réduction) par rapport à la course de l'élément de commande 24. Un agencement à plusieurs bras de levier peut également être prévu, procurant ainsi une montée sensiblement verticale des tiges 22 et 23, facilitant l'extraction ou la rétraction de ces dernières par les orifices 27. Le moyen de pivotement ainsi constitué permet, lorsque l'élément de commande 14 est inséré dans l'orifice de commande 24, en agissant sur l'extrémité libre du levier 51, de faire pivoter ledit levier et ainsi de déplacer les tiges de contact 22 et 23 de façon à ce que leurs extrémités libres sortent hors du socle par les orifices d'enfichage 27.

De manière avantageuse, et tel qu'illustré sur les figures 1 et 2, l'orifice de commande 24 sert également d'orifice d'enfichage secondaire. Dans la configuration illustrée à la figure 1, le contact de terre est prévu à ce niveau, puis la phase et le neutre sur l'une ou l'autre des premières et secondes tiges de contact électrique 22 et 23. Dans une telle configuration, le levier 51 est réalisé en matériau isolant, comme par exemple en matériau plastique. Cette configuration permet d'obturer l'orifice d'actionnement afin de protéger l'accès au contact phase. On peut aisément inverser ou modifier cette disposition selon convenance.

Dans l'exemple de réalisation illustré aux figures 1 et 2, l'élément connecteur mâle est prévu sous le réservoir 42 de la bouilloire. La portion inférieure de l'élément connecteur mâle est conformée de manière à délimiter une cavité 15 ou un logement de forme sensiblement correspondante mais de dimension légèrement supérieure à la section en saillie 29 de l'élément connecteur femelle 2. La hauteur libre de l'élément de commande 14 est prévue légèrement inférieure à la hauteur de la cavité 15, protégeant de ce fait l'élément 14 lorsque la bouilloire est posée sur une surface autre que le socle. La face externe de la paroi 11 de la cavité 15 forme une face de contact 16 de l'élément connecteur mâle 1. Contre cette face, une première et une seconde piste de contact électrique 12 et 13 sont prévues. Ces pistes sont prévues pour coopérer électriquement avec les tiges de contact électriques 22 et 23 de l'élément connecteur femelle. Elles sont avantageusement concentriques et circulaires, afin de permettre la disposition de l'élément connecteur mâle sur l'élément connecteur femelle selon n'importe quelle orientation angulaire. L'élément de commande 14 est également prévu de façon à former une saillie par rapport à la face de contact 16 et s'étend sensiblement axialement vers le bas de la bouilloire. Dans la présente forme d'exécution, l'élément de commande 14 est fixe, mais celui-ci peut être prévu escamotable, tel que décrit plus loin.

Comme on peut le voir à la figure 1, la section proéminente 29 de l'élément connecteur femelle 2 et sa contre-partie correspondante, la cavité ou le logement 15, permettent de réaliser en toute facilité un positionnement latéral et longitudinal précis, assurant de ce fait l'alignement d'une part des tiges de contact 22 et 23 de l'élément connecteur femelle 2 avec les pistes de contact 12 et 13 de l'élément connecteur mâle, et d'autre part de la tige de commande 14 de l'élément connecteur mâle en regard de l'orifice de commande 24 de l'élément connecteur femelle.

En raison de la conformation décrite précédemment, notamment grâce aux pistes 12 et 13, la bouilloire peut être disposée sur son socle selon n'importe quelle position angulaire.

La figure 2 illustre le même agencement lorsque la bouilloire repose sur son socle. On observe sur cette figure le mode d'opération du moyen d'extraction 5 des tiges de contact. L'élément de commande 14 est inséré dans l'orifice de commande 24 correspondant et appuie sur le contact 53, de manière à exercer une force sur le moyen de pivotement. L'extrémité libre du levier 51 est ainsi poussée vers le bas. Grâce au pivot 52, l'extrémité opposée du levier 51 est soulevée, entraînant de ce fait les tiges de contact 22 et 23 à travers les orifices d'enfichage 27, de préférence au-delà de la face de contact 26, afin d'entrer en contact électrique avec les pistes 12 et 13 de l'élément connecteur mâle.

Lors de la prise de la bouilloire afin de la retirer de son socle, le moyen de pivotement agit en sens inverse grâce à un moyen de rappel de type connu tel un ressort 54 agencé de manière à faire pivoter le moyen d'extraction de sorte que les tiges 22 et 23 soient réintroduites dans le socle (pivotement dans le sens anti-horaire dans l'exemple de la figure 2).

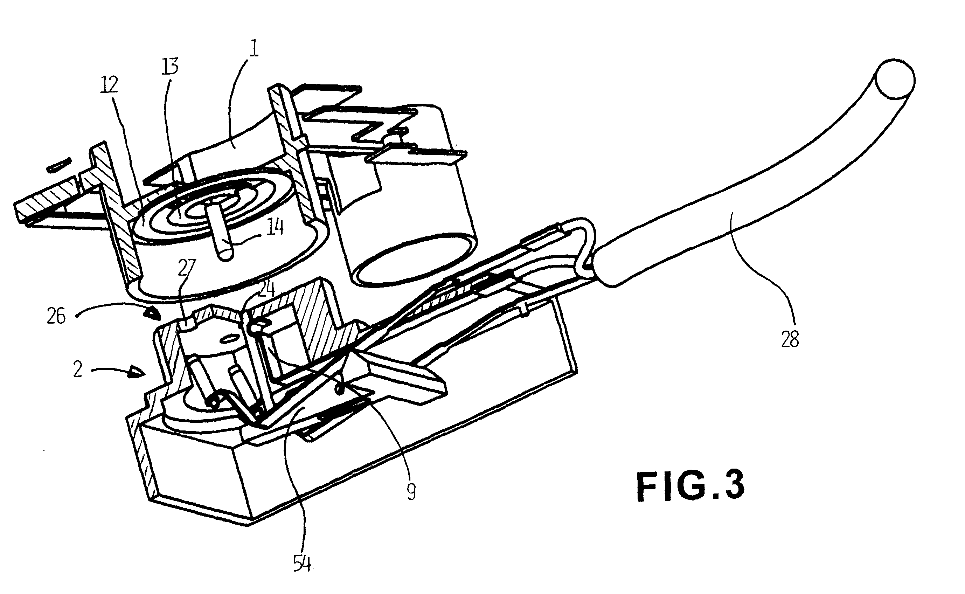

La figure 3 représente les deux éléments connecteur illustrés en perspective. Sur l'élément mâle, les pistes 12 et 13 concentriques et circulaires sont aisément visibles, de même que l'élément de commande 14. Sur l'élément femelle, on remarque les orifices d'enfichage 27 et l'orifice de commande 24. De manière avantageuse, l'élément de commande 14 et l'orifice de commande 24 correspondant, sont disposés sensiblement centralement selon l'axe A-A. On obtient ainsi une disposition angulairement symétrique qui confère la possibilité de positionner l'élément connecteur mâle, et par le fait même la bouilloire, contre l'élément connecteur femelle, selon n'importe quelle orientation angulaire. La figure 3 illustre par ailleurs un moyen d'extraction des tiges de contact présentant un levier à double effet 54, permettant le pivotement, sous l'action de l'élément de commande 14, d'une part d'un premier levier sensiblement radial, et d'autre part d'une paire de lamelles métalliques souples à l'extrémité desquelles sont fixées les tiges 22 et 23, lesdites lamelles étant à leur autre extrémité reliées au cordon d'alimentation électrique. La connexion de terre est réalisée par une lame souple 9 qui s'appuie sur la tige 14 dès les premiers millimètres de course de descente, bien avant la mise en liaison des contacts neutre et phase sur les disques correspondants.

Les figures 4a à 4d représentent une autre forme d'exécution du dispositif de connexion selon l'invention où une seule tige de contact est mobile. La mise à la masse s'effectue par un contact de mise à la terre 9 de type plat ou mince, comme par exemple une lame souple disposée dans le plan de la face de contact 26 et selon une position radiale de façon à correspondre avec une piste de contact électrique 12 ou 13, avantageusement circulaire, prévue sur la face de contact 16 de l'élément connecteur mâle. Il peut également s'agir d'un contact de type plot, monté de façon élastique, de façon à assurer la connexion de la terre avec la piste correspondante de l'élément connecteur avant la connexion du neutre ou de la phase. L'élément de commande 14 est disposé de façon à agir sur un moyen d'extraction 5 des tiges de contact par exemple par pivotement, similaire en de nombreux points à celui préalablement décrit. On retrouve ainsi un levier 51 susceptible de basculer autour d'un pivot 52 sous l'action de l'élément de commande 14 lorsque ce dernier est inséré dans l'orifice correspondant. Dans cette forme d'exécution, le levier n'agit que sur une seule tige de contact électrique 22, servant par exemple pour le neutre. Un contact de phase 91 est prévu dans la portion extrême de la course de l'élément de commande 14.

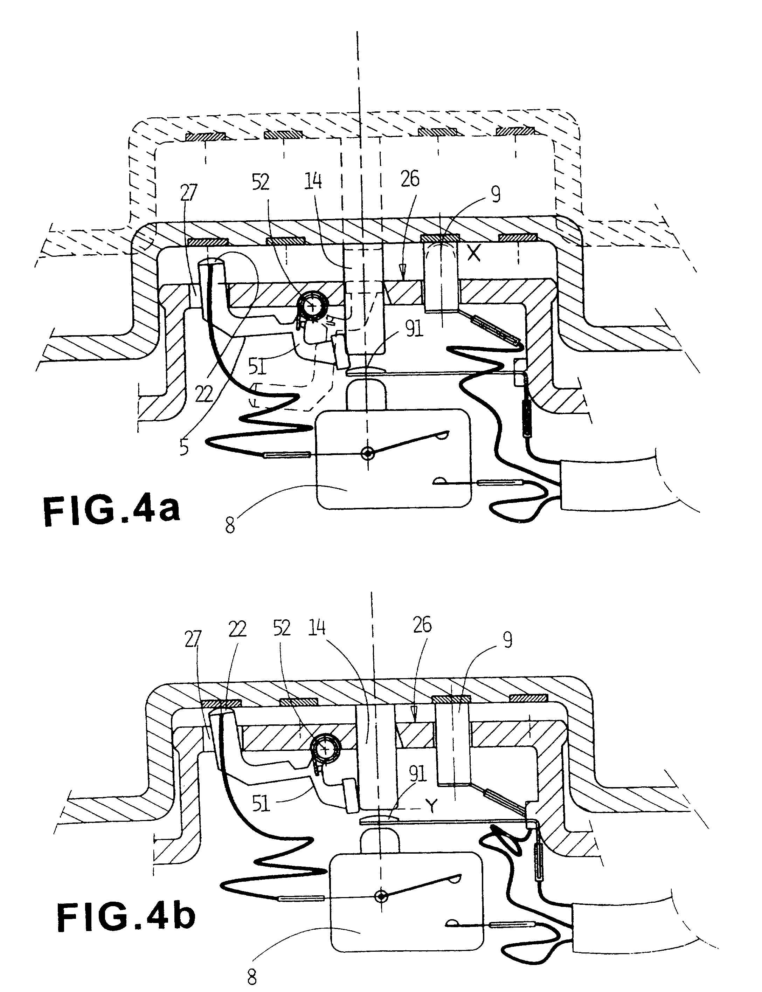

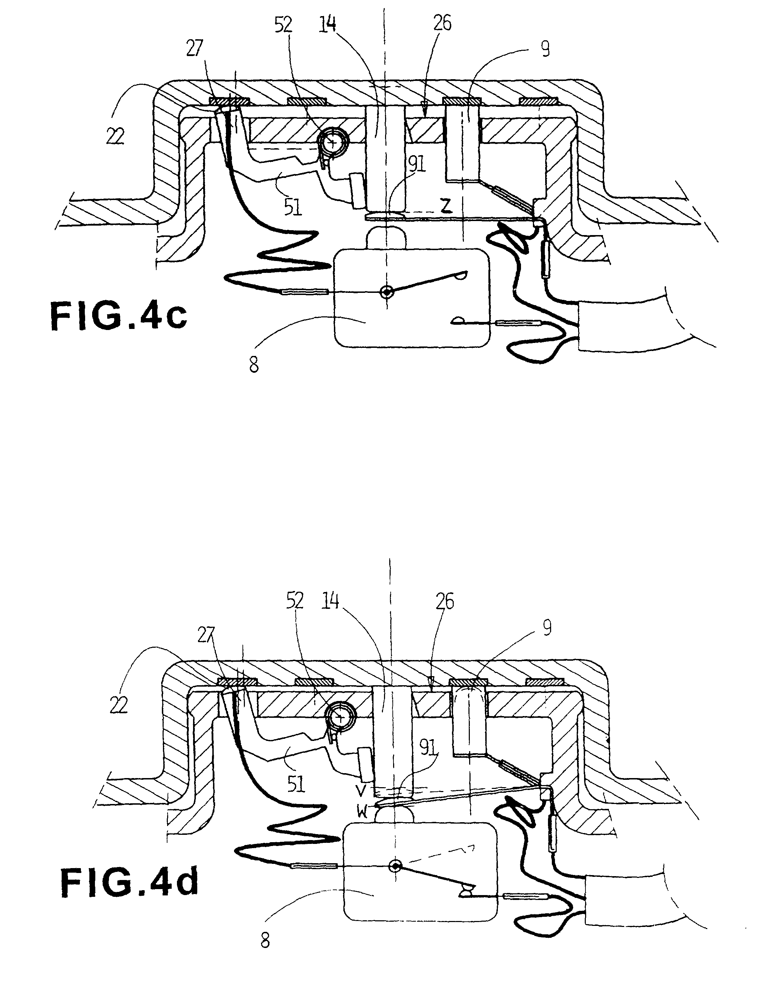

De manière avantageuse, ce contact est monté mobile axialement et coopère avec un interrupteur 8 de type faible course. L'agencement prévu permet de réaliser un enchaînement séquencé de sorte que les contacts soient établis tour à tour. Ainsi, la succession des figures 4a à 4d montre progressivement cette mise en liaison des parties mâles et femelles du dispositif de connexion. Le contact terre est avantageusement établi en premier lieu sur le contact 9, comme le représente la figure 4a, sur laquelle est indiquée en pointillé une position du connecteur mâle avant enfichage et en trait plein lors du contact de terre. Puis, l'élément de commande 14 agit sur le levier 51 pour amorcer la phase de pivotement. Avant que l'élément de commande n'atteigne le contact 91 (figure 4b) la première tige de contact 22 à l'extrémité du levier 51 entre en contact avec la piste correspondante de l'élément connecteur mâle, la face d'appui de ce dernier étant maintenant à proximité immédiate de la face d'appui de l'élément connecteur femelle. Le contact neutre pour sa part n'est pas encore établi, l'interrupteur 8 étant en position ouverte. L'élément 14 est ensuite enfoncé jusqu'à la position z (figure 4c), soit de manière à amorcer le contact avec le contact 91. Le contact phase est alors établi. L'extrémité de l'élément de contact 14 est ensuite déplacée jusqu'en position v (figure 4d), juste avant l'actionnement de l'interrupteur 8; le contact neutre n'est toujours pas établi, mais une bonne liaison électrique est établie entre la tige 22 et la piste correspondante, ladite tige étant maintenue en appui ferme contre ladite piste. Au niveau des contacts 22 et 91 on obtient déjà une force de contact suffisante pour obtenir une résistance de contact faible. Ce n'est qu'à ce moment, avec un léger déplacement additionnel de la tige 14 en position w, que l'interrupteur 8 est activé et ferme le circuit neutre. Un tel agencement séquencé permet d'assurer la continuité électrique lorsqu'un bon contact mécanique est établi entre les éléments du connecteur. Réciproquement, l'interrupteur 8 étant de préférence à rupture brusque, le circuit électrique est totalement ouvert avant que les contacts 91 et 22 ne soient séparés de leurs éléments de contact respectifs. La séparation des contacts s'effectue ainsi hors tension. On évite ainsi la création d'arcs pouvant être la cause d'une usure prématurée des contacts. Une telle usure risquerait d'affecter le bon fonctionnement du dispositif de connexion. L'interrupteur protège donc à la fois les pistes et les contacts correspondants. Autrement, on minimise également l'utilisation de contacts recouverts de métal noble tel l'argent, qui protège aussi les contacts, mais augmente significativement leur coût. On minimise par ailleurs l'utilisation de pistes argentées (ou similaires); ces pistes présentant des surfaces plus importantes encore que les contacts, leur coût en alliage noble serait d'autant plus important. Par ailleurs, avec un tel interrupteur, si jamais la tige 22 demeure accidentellement en position sortie une fois la déconnexion effectuée, aucune tension n'est présente.

Dans le cas où un tel moyen de protection des contacts n'est pas prévu, comme par exemple pour un robot où la fonction arrêt est automatique dès que l'on relâche la pression sur le couvercle, pour l'extraire du socle convecteur, l'interrupteur 8 est supprimé et le contact 22 est directement relié électriquement au neutre. Le contact électrique est alors établi selon l'ordre naturel de contact mécanique, soit dans l'exemple illustré aux figures 4a à 4d, terre, neutre et phase.

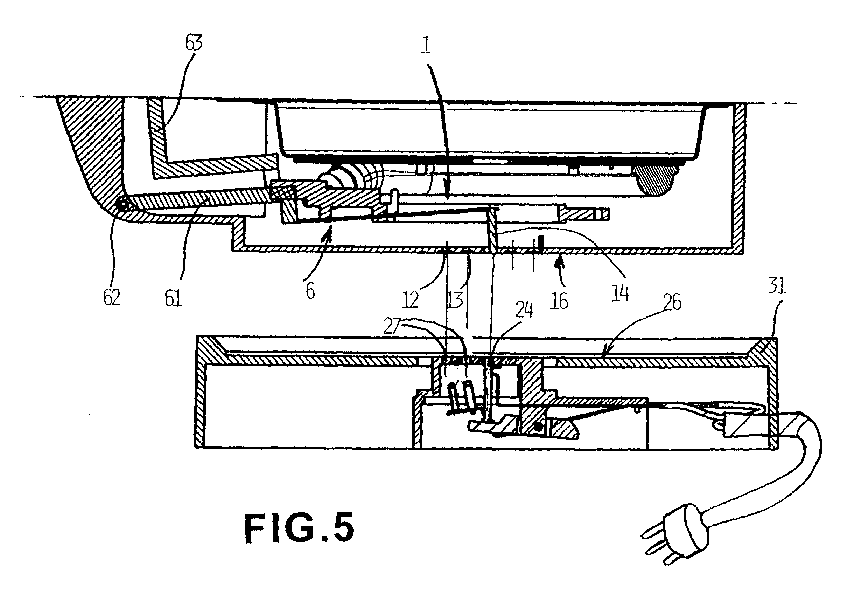

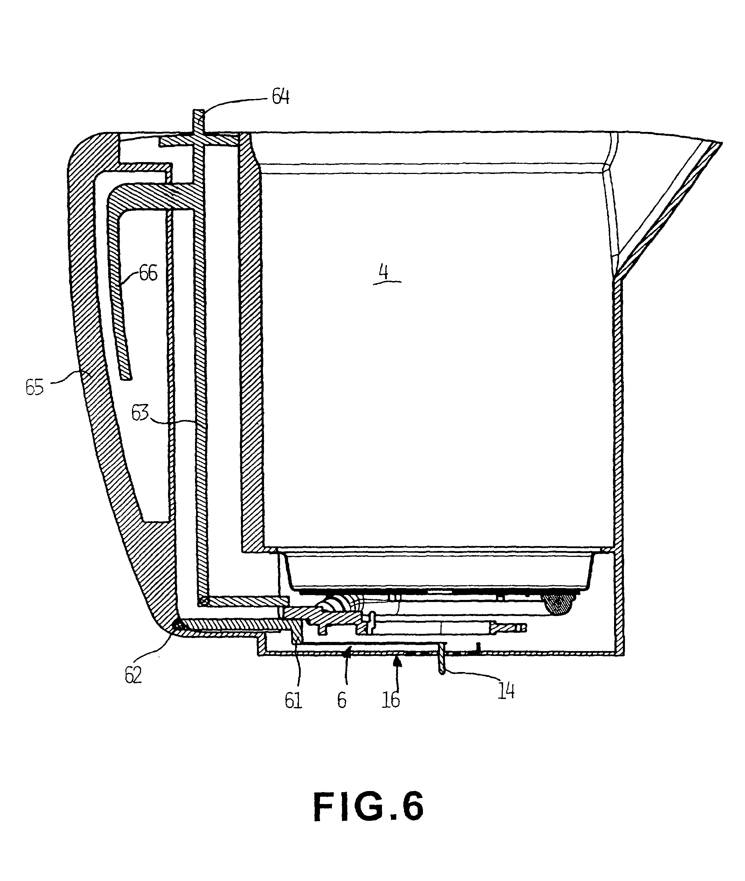

La figure 5 illustre une autre variante d'un dispositif de connexion selon l'invention. Les différents éléments constituants de cette variante sont similaires à ceux décrits précédemment. Les mêmes éléments portent ainsi les mêmes numéros de référence. Selon cette variante, l'élément de commande 14 est mobile entre une position escamotée illustrée sur la figure 5 et une position sortie illustrée sur la figure 6. Un moyen d'actionnement 6 du connecteur permet le passage d'une position à une autre. Ce moyen prévoit par exemple un levier 61 disposé sensiblement radialement et s'étendant depuis l'élément de commande 14 vers la paroi latérale de la bouilloire. Son extrémité libre, opposée à l'élément de commande 14, est reliée à une tige d'actionnement 63, elle-même reliée au bouton « marche/arrêt » 64 de la bouilloire, tel qu'illustré à la figure 6. Lorsque ce bouton est placé en position « marche », comme il est représenté sur la figure 6, la tige d'actionnement 63 tire sur l'extrémité du levier 61 qui, grâce à un pivot 62, pivote de façon à faire sortir l'élément de commande 14 au-delà de la face de contact 16.

La sélection de la position « arrêt », par déplacement du bouton 64, par exemple radialement, en direction de la poignée 65 de la bouilloire, entraîne l'effet inverse, à savoir le pivotement en sens inverse du levier 61, de façon à rentrer l'élément de commande 14, comme il est indiqué figure 5. Si la bouilloire est saisie alors que le bouton est toujours en position « marche », le moyen de positionnement du connecteur 6 est avantageusement prévu de façon à ce que l'élément de commande 14 se rétracte sous le simple effet de poser la bouilloire sur une surface donnée. A cet effet, le moyen d'actionnement 6 prévoit un levier 61 flexible, ou encore un système de rappel à ressort, provoquant la mise en position « arrêt », s'enclenchant dès qu'une légère force s'exerce contre l'élément de commande 14. On évite ainsi une éventuelle chauffe à sec lors de l'insertion de la bouilloire sur son socle. Le couplage peut être unidirectionnel (élément de commande 14 sorti pour la position « marche ») ou encore bidirectionnel. Avantageusement, l'élément de commande 14 est escamoté lors de l'arrêt de la bouilloire, ou encore lors de la prise en main de la bouilloire, par une gâchette 66 actionnée par la main de l'utilisateur.

Cette forme d'exécution avec élément de commande 14 asservi présente de nombreux avantages. Ainsi, il est possible de supprimer la cavité ou logement 15 prévu sous l'élément connecteur mâle, puisqu'il n'est plus nécessaire de protéger l'élément de commande 14. De ce fait, il est possible de supprimer la saillie 29 correspondante sur l'élément connecteur femelle. La forme de ces deux éléments est ainsi simplifiée et l'encombrement réduit. Par ailleurs, afin de faciliter le positionnement de la bouilloire sur son socle, une bordure de centrage 31 est prévue sur le socle. Celle-ci peut prendre la forme d'une rampe disposée sur le pourtour du socle. La bordure peut être continue ou non. Une telle configuration permet un positionnement visuel de la bouilloire sur son socle, facilitant grandement cette opération. Cette variante peut être prévue de sorte que l'élément de commande 14 pilote un moyen d'extraction 5 des tiges de contact de type à pivot tel que préalablement décrit ou de tout autre type. Il peut également être prévu pour piloter une seule tige de contact électrique 22 ou 23. L'élément de commande 14 est relié électriquement à l'intérieur de la bouilloire par un moyen souple ou un contact glissant au pôle adéquat terre, neutre ou phase.

Cet élément de commande peut aussi être indépendant du circuit électrique, réalisé en matériau quelconque.

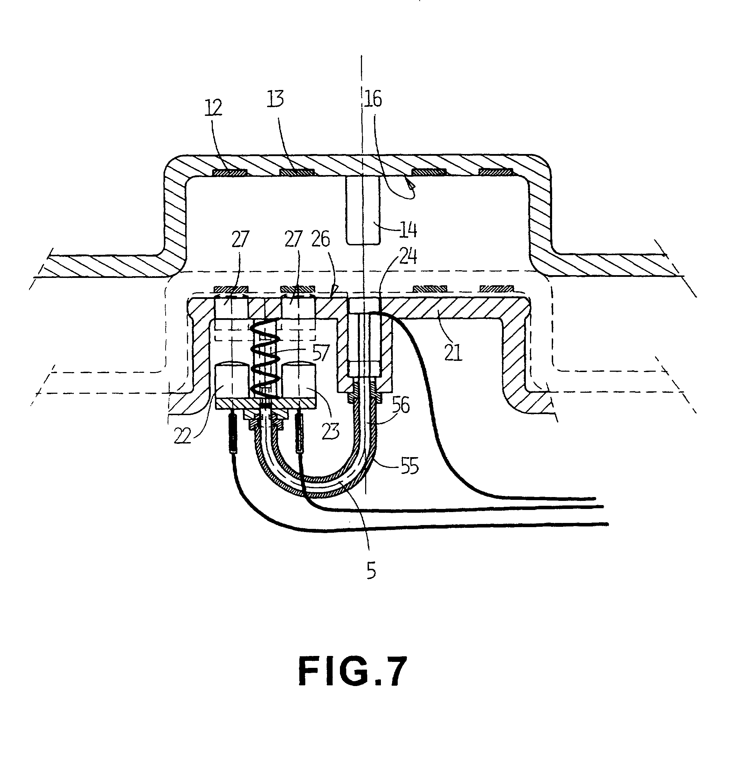

La figure 7 illustre une variante de réalisation où le moyen d'extraction 5 des tiges de contact est réalisé à l'aide d'un système à câble en compression comprenant un câble 56 guidé dans une gaine 55 de façon à parcourir un trajet donné entre d'une part l'orifice de commande 24 et d'autre part les orifices d'enfichage 27. L'extrémité libre du câble 56 est disposée à proximité de l'orifice de commande 24 de façon à ce que l'élément de commande 14 puisse coopérer mécaniquement avec cette dernière lors de son enfoncement dans l'orifice de commande 24. Le câble 56, sous l'effet de la force de la tige 14 s'enfonçant, glisse ou coulisse dans la gaine 55. L'extrémité opposée, reliée aux contacts, repousse ceux-ci à travers les orifices d'enfichage 27. Un moyen de rappel 57, comme par exemple un ressort monté en compression, permet d'assurer la rétraction des tiges 22 et 23 lorsque l'élément de commande 14 est retiré de l'orifice 24.

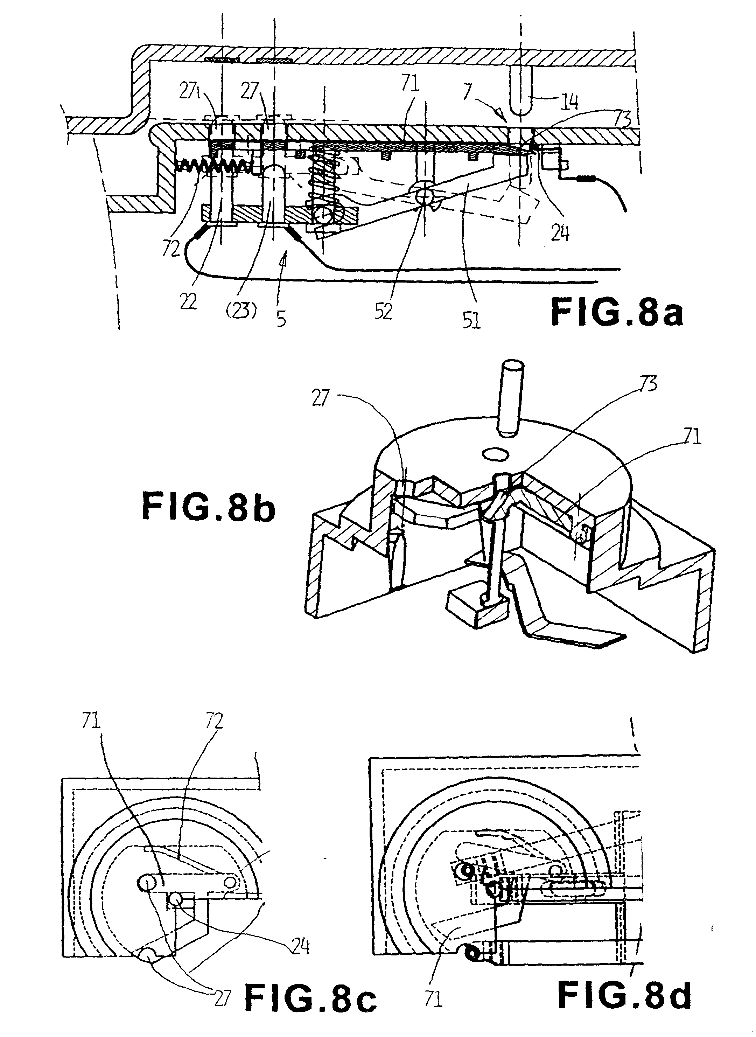

D'autres variantes avantageuses du dispositif de connexion selon l'invention sont également prévues, comportant un moyen d'obturation 7 permettant de limiter l'accès à l'un ou plusieurs des orifices d'enfichage, pour des fins de sécurité. Les figures 8a à 8d illustrent deux exemples où le moyen d'obturation 7 comprend un volet 71 mobile en coulissement (fig. 8a) ou pivotement (fig. 8b à 8d) entre une position ouverte et une position fermée. L'ouverture est réalisée par coulissement ou pivotement lorsque l'élément de commande 14 agit contre une rampe 73 du volet 71 prévue au niveau de l'orifice de commande 24. Un ressort de rappel 72, ramène le volet en position fermée dès que les tiges de contact sont retirées de l'élément connecteur femelle. En position normale fermée, le volet obture un ou plusieurs des orifices d'enfichage, empêchant l'accès aux tiges de contact électrique. En position ouverte, le volet libère les orifices d'enfichage 27. Sur la figure 8c est présenté le volet 71 en position normalement fermée. La figure 8d montre, lors du positionnement de la bouilloire, le pivotement du volet 71 permettant l'accès aux tiges de contact.

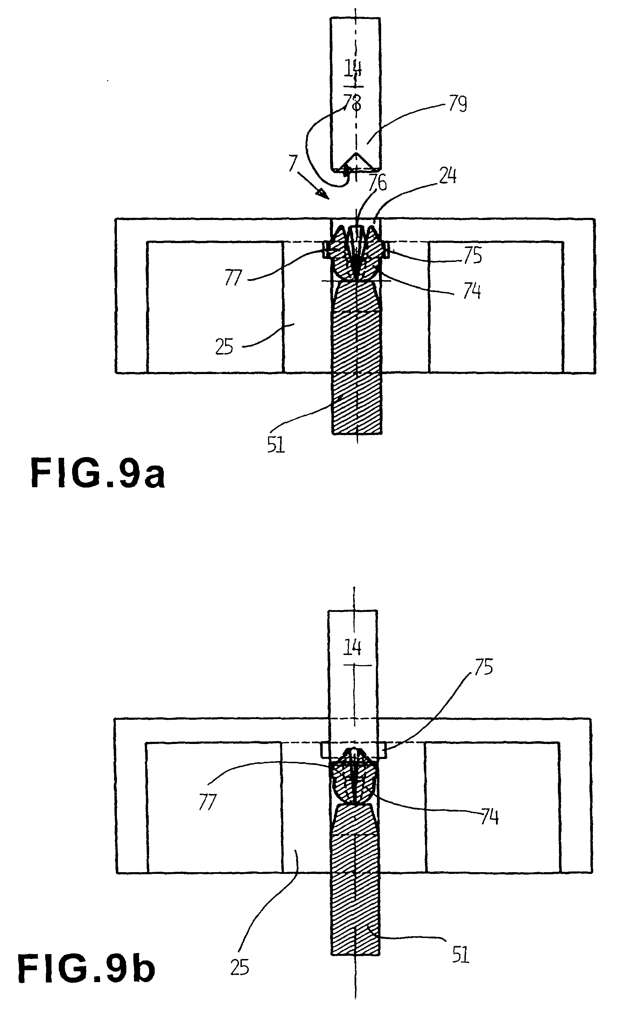

Les figures 9a et 9b illustrent une autre variante où le moyen d'obturation 7 comprend une broche codée 79 prévue à l'extrémité du moyen de commande 14 et dont le diamètre est de préférence inférieur à trois millimètres. Cette broche est prévue pour coopérer avec l'extrémité libre 74 du levier 51 normalement maintenue en position bloquée par des encoches 75 ménagées sur la paroi interne du canal de commande 25 dans lequel le levier 51 est disposé. Cette extrémité 74 comporte au moins une fente 76 permettant de refermer les unes vers les autres les portions ainsi délimitées. En refermant de la sorte ces portions (figure 9b), les oreilles 77 coopérant normalement avec les encoches 75 sont libérées et le levier peut être poussé vers l'intérieur du socle pour provoquer par exemple l'action d'extraction des tiges de contact. Grâce à la conformation particulière de l'extrémité 74 du levier 51, celui-ci ne peut être repoussé qu'avec l'action d'une broche codée 79 de forme adaptée. En effet, sa portion inférieure comporte une face de déverrouillage 78 pouvant prendre une forme conique ou pyramidale inversée par exemple. L'angle de la tête du cône ou de la pyramide est supérieur à celui formé par les pointes écartées du levier. La broche, en coopérant avec les pointes écartées, tend à les refermer les unes vers les autres, pour ainsi permettre de libérer les oreilles 77 des encoches 75. Avec un tel moyen d'obturation, la connexion est empêchée si on utilise un élément connecteur mâle dépourvu d'une telle broche codée 79. On réduit ainsi le risque d'actionner le poussoir avec un objet usuel de cuisine tel un couteau, une fourchette, un tire-bouchon, etc.

## Revendications

1. Dispositif de connexion pour appareil électrique comprenant un élément connecteur femelle (2) constitué d'une paroi (21) formant une face de contact (26), au moins un orifice d'enfichage principal (27), et au moins une première tige de contact électrique (22), un élément connecteur mâle (1) constitué d'une paroi (11) formant une face de contact (16) sur laquelle est disposée au moins une première bande de contact électrique (12), ledit élément connecteur mâle étant adapté pour être disposé de manière amovible en position de connexion contre ledit élément connecteur femelle, **caractérisé en ce que** la ou les tiges de contact électrique (22) sont prévues mobiles sur un moyen d'extraction (5) des tiges de contact et disposées en regard desdits orifices (27) de façon à ce que lorsque les faces de contact (16, 26) des éléments mâle (1) et femelle (2) sont disposés à proximité immédiate l'une de l'autre, les extrémités libres des tiges de contact électrique (22) traversent les orifices (27) et sont susceptibles d'entrer en contact électrique avec les bandes de contact électrique de l'élément connecteur mâle.

2. Dispositif de connexion selon la revendication 1, dans lequel le moyen d'extraction des tiges de contact (22, 23) est susceptible d'être actionné par un moyen de commande.

3. Dispositif de connexion selon l'une des revendications 1 ou 2, dans lequel le moyen de commande est constitué par un élément de commande (14) comprenant une tige de contact électrique.

4. Dispositif de connexion selon la revendication 3, dans lequel ledit élément de commande est rétractable.

5. Dispositif de connexion selon l'une des revendications 1 à 4, dans lequel ledit moyen d'extraction (5) est un moyen de pivotement.

6. Dispositif de connexion selon la revendication 5, dans lequel le moyen de pivotement comprend un levier (51) monté sur un pivot (52) et coopérant avec les tiges de contacts (22, 23) et susceptible d'être actionné par ledit moyen de commande.

7. Dispositif de connexion selon l'une des revendications 1 à 4, dans lequel ledit moyen d'extraction (5) est un système à câble en compression.

8. Dispositif de connexion selon la revendication 7, comprenant un câble (56) guidé dans une gaine (55), une première extrémité du câble étant reliée aux contacts (22, 23), la seconde extrémité étant disposée à proximité de l'orifice de commande (24) de façon à ce que l'élément de commande (14) puisse coopérer mécaniquement avec cette dernière lors de son enfoncement dans l'orifice de commande (24).

9. Dispositif de connexion selon l'une des revendications 5 à 7, dans lequel ledit élément connecteur femelle comporte un orifice de commande (24) par lequel le moyen de commande est susceptible de pénétrer pour actionner ledit moyen d'extraction.

10. Dispositif de connexion selon la revendication 8, dans lequel ledit orifice de commande (24) tient également lieu d'orifice d'enfichage secondaire (27).

11. Dispositif selon l'une des revendications précédentes, dans lequel ledit élément connecteur mâle comprend également une seconde bande de contact électrique (13) et ledit élément connecteur femelle comprend également une seconde tige de contact électrique (23).

12. Utilisation d'un dispositif de connexion selon l'une des revendications précédentes dans un appareil électrique.

13. Utilisation selon la revendication 12, ledit élément connecteur mâle étant associé à une bouilloire, ledit élément connecteur femelle à son socle.

## Patentansprüche

1. Anschlußvorrichtung für ein Elektrogerät, mit einem Buchsenverbinderelement (2), das aus einer Wand (21) besteht, die eine Kontaktfläche (26) bildet, wenigstens einer Hauptstecköffnung (27) und wenigstens einem elektrischen Kontaktstift (22), einem Steckverbinderelement (1), das aus einer Wand (11) besteht, die eine Kontaktfläche (16) bildet, an der wenigstens ein erstes elektrisches Kontaktband (12) angeordnet ist, wobei das Steckverbinderelement zu einer Anordnung auf abnehmbare Weise in der Anschlußposition gegen das Buchsenverbinderelement geeignet ist, **dadurch gekennzeichnet, daß** der oder die elektrischen Kontaktstifte (22) beweglich an einem Extraktionsmittel (5) für die Kontaktstifte vorgesehen und derart gegenüber den Öffnungen (27) angeordnet sind, daß dann, wenn die Kontaktflächen (16, 26) des Steckelements (1) und des Buchsenelements (2) in unmittelbarer Nähe zueinander angeordnet sind, die freien Enden der elektrischen Kontaktstifte (22) die Öffnungen (27) durchqueren und mit den elektrischen Kontaktbändern des Steckverbinderelements in elektrischen Kontakt gelangen können.

2. Anschlußvorrichtung nach Anspruch 1, bei welcher das Extraktionsmittel für die Kontaktstifte (22, 23) von einem Steuermittel betätigt werden kann.

3. Anschlußvorrichtung nach einem der Ansprüche 1 oder 2, bei welcher das Steuermittel aus einem Steuerelement (14) mit einem elektrischen Kontaktstift besteht.

4. Anschlußvorrichtung nach Anspruch 3, bei welcher das Steuerelement zurückziehbar ist.

5. Anschlußvorrichtung nach einem der Ansprüche 1 bis 4, bei welcher das Extraktionsmittel (5) ein Schwenkmittel ist.

6. Anschlußvorrichtung nach Anspruch 5, bei welcher das Schwenkmittel einen Hebel (51) aufweist, der an einem Zapfen (52) angebracht ist, mit den Kontaktstiften (22, 23) zusammenwirkt und von dem Steuermittel betätigt werden kann.

7. Anschlußvorrichtung nach einem der Ansprüche 1 bis 4, bei welcher das Extraktionsmittel (5) ein System mit Kompressionsleitung ist.

8. Anschlußvorrichtung nach Anspruch 7, mit einem in einer Hülse geführten Kabel (56), wobei ein erstes Ende des Kabels mit den Kontakten (22, 23) verbunden ist, und wobei das zweite Ende in der Nähe der Steueröffnung (24) derart angeordnet ist, daß das Steuerelement (14) beim Eindrücken in die Steueröffnung (24) mechanisch damit zusammenwirken kann.

9. Anschlußvorrichtung nach einem der Ansprüche 5 bis 7, bei welcher das Buchsenelement eine Steueröffnung (24) aufweist, durch die das Steuermittel eindringen kann, um das Extraktionsmittel zu betätigen.

10. Anschlußvorrichtung nach Anspruch 8, bei welcher die Steueröffnung (24) auch die Sekundärstecköffnung (27) ersetzt.

11. Vorrichtung nach einem der vorhergehenden Ansprüche, bei welcher das Steckverbinderelement auch ein zweites elektrisches Kontaktband (13) aufweist und das Buchsenverbinderelement auch einen zweiten elektrischen Kontaktstift (23) aufweist.

12. Verwendung einer Anschlußvorrichtung nach einem der vorhergehenden Ansprüche in einem Elektrogerät.

13. Verwendung nach Anspruch 12, wobei das Steckverbinderelement einem Wasserkocher und das Buchsenverbinderelement seinem Sockel zugeordnet ist.

## Claims

1. A connection device for an electrical appliance, the device comprising a female connector element (2) constituted by a wall (21) forming a contact face (26), at least one main plugging orifice (27), and at least a first electrical contact pin (22), a male connector element (1) constituted by a wall (11) forming a contact face (16) on which there is disposed at least a first electrical contact strip (12), said male connector element being designed to be disposed in removable manner in a connection position against said female connector element, the device being **characterized in that** the electrical contact pin(s) (22) are movably provided on extraction means (5) for extracting the contact pins and are disposed facing said orifices (27) so that when the contact faces (16, 26) of the male and female elements (1, 2) are disposed in the immediate vicinity of each other, the free ends of the electrical contact pins (22) pass through the orifices (27) and are capable of coming into electrical contact with the electrical contact strips of the male connector element.

2. A connection device according to claim 1, in which the extraction means for extracting the contact pins (22, 23) is capable of being actuated by control means.

3. A connection device according to claim 1 or claim 2, in which the control means is constituted by a control element (14) comprising an electrical contact pin.

4. A connection device according to claim 3, in which said control element is retractable.

5. A connection device according to any one of claims 1 to 4, in which said extraction means (5) is pivot means.

6. A connection device according to claim 5, in which the pivot means comprises a lever (51) mounted on a pivot (52) and co-operating with contact pins (22, 23) and capable of being actuated by said control means.

7. A connection device according to any one of claims 1 to 4, in which said extraction means (5) is a system with a cable in compression.

8. A connection device according to claim 7, including a cable (56) guided in a sheath (55), a first end of the cable being connected to the contacts (22, 23), the second end being disposed in the vicinity of the control orifice (24) so that the control element (14) can co-operate mechanically with said second end when said control element is driven into the control orifice (24).

9. A connection device according to any one of claims 5 to 7, in which said female connector element includes a control orifice (24) through which the control means is capable of penetrating in order to actuate said extraction means.

10. A connection device according to claim 8, in which said control orifice (24) also serves as a secondary plugging orifice (27).

11. A device according to any preceding claim, in which said male connector element also comprises a second electrical contact strip (13), and said female connector element also comprises a second electrical contact pin (23).

12. Use of a connection device according to any preceding claim in an electrical appliance.

13. Use according to claim 12, said male connector element being associated with a kettle, and said female connector element being associated with the stand of said kettle.
